# EUROPEAN PATENT SPECIFICATION

(11) **EP 0 523 788 B1**
(45) Date of publication and mention of the grant of the patent: **04.10.1995**
(21) Application number: 92202090.4
(22) Date of filing: 08.07.1992
(51) Int. Cl.: B60S 9/12, B60P 1/02, B60G 17/052

(54) **Device for fixing the height of a vehicle chassis**
Einrichtung zur Einstellung der Höhe eines Fahrzeuguntergestells
Installation pour fixer la hauteur d'un châssis de véhicule

(30) Priority: 17.07.1991 NL 9101255
(43) Date of publication of application: 20.01.1993
(73) Proprietor: WEWELER N.V., NL-7332 AP Apeldoorn (NL)
(72) Inventor: Zantinge, Johan Michiel, NL-6991 TX Rheden (NL); Aalderink, Derk Geert, NL-7245 NV Laren (NL)
(74) Representative: de Bruijn, Leendert C.

(56) References cited:
- CH-A- 438 964
- DE-B- 1 269 511
- DE-B- 2 539 702
- GB-A- 2 214 142

## Description

The invention relates to a device for fixing the height of a loading floor of a vehicle, which loading floor can be brought to the desired height by its own axle suspension gas bellows system, with one or more supporting legs being lockable to the chassis, said supporting leg having a telescopic part connected to a foot to be supported on the ground.

It is known per se, for example from GB-B-2,214,142 of Applicant, to keep a chassis of a vehicle at the same height during loading and unloading at a platform by means of a height regulator which keeps the chassis, and thus the loading floor, at the same height, by affecting the gas feed and discharge to the gas bellows system, which is also used for travelling on the road.

The disadvantages of this system are that a change in the compression of the tyres is not compensated for, and that the gas supply to the bellows system is not fast enough if the load of the vehicle is suddenly changed to a significant extent, for example through the travelling to and fro of forklift trucks between a platform and the loading floor with a heavy load which has to be deposited on or removed from the loading floor.

The problems are particularly great with the modern trend towards a low loading floor of the vehicle, in order to permit a high stacked load, and high loading and unloading platforms, in the case of which the gas bellows system is extruded to near its maximum permissible length, in order to raise the loading floor to the height of such a high platform.

An attempt was therefore made to improve this by using mechanically or hydraulically acting supporting legs supported on the ground below (or on an axle). A device of this kind is known from DE-B-2539702.

This has the disadvantage that such supporting legs are placed under an increasingly high load during loading, while after unlocking of such supporting legs the loading floor after loading will first drop considerably before the air bellows system takes over the total load.

On the basis of this last known structure, the invention now proposes a solution in that in a device of the type mentioned in the preamble a height regulator is provided on a supporting leg, and acts between the chassis and said telescopic part or between said telescopic part and said foot, said telescopic part being movable relative to said supporting leg through loading said supporting leg, said height regulator increasing the volume in the gas bellows system in order to relieve the supporting leg from the load.

Said height regulator can consequently relieve the supporting leg also with greatly increasing loading of the vehicle, in such a way that said supporting leg, for example, only absorbs the forces of a forklift truck with load travelling on the loading floor. When the gas bellows system through said height regulator has reached the pressure adapted to that increased load, the supporting leg is relieved again, and so on. The loading floor thus remains practically at the desired height, despite widely fluctuating loads, for example through forklift trucks travelling on and off it.

The device according to the invention is preferably designed in such a way that the height regulator is fitted between the chassis and an upper part of the supporting leg not coming into contact with the ground, that said upper part of the supporting leg is movable vertically relative to the chassis with respect to an abutment on the chassis, which limits its upward movement and can then transfer forces coming from the load of the vehicle, from the chassis or from the loading floor onto the supporting leg, and that said telescopic part and said foot having means for sliding them relative to said upper part and for fixing them relative to said upper part.

The supporting leg control means for extending and shortening the supporting leg preferably have a mechanical or hydraulic fixing system and a pneumatic extending and shortening device. No external hydraulic pressure is needed then and, if hydraulic medium is used for said fixing system, it can be confined for pressure build-up by a gas-pressure-operated one-way valve.

The height regulator for travelling on the road is shut off from its influence on the gas bellows system during working with the supporting leg.

If the supporting leg is made in such a way that it can be swung away, it can be prevented from causing damage if someone fails to put it in the travelling position.

In the abovementioned case of a pneumatic extending and shortening means on the supporting leg, the gas for the gas bellows and/or brake system can be used for shortening the supporting leg for travelling, for example automatically on the first braking, if by mistake the supporting leg has not been shortened earlier.

The supporting leg can, however, also be of any type which is known in principle, with mechanical or hydraulic extending and fixing means, in which case according to the invention the height regulator is fitted between a part of the supporting leg which is movable in height relative to the chassis and can be fixed relative to the chassis, and the foot of the supporting leg which is movable slightly in height relative to said part which can be fixed.

It is preferable to use only a single supporting leg of the type mentioned, for example disposed in the centre on a cross bar of the chassis.

A light and simple construction is thus obtained.

The invention will now be explained in greater detail with reference to appended drawings, in which:
Fig. 1 shows a side view, partially section, of a supporting leg in a first embodiment as a part of a device according to the invention, in the unloaded state, fitted on a cross bar of a chassis of a vehicle, normally a semi-trailer or trailer;
Fig. 2 shows the same side view, but simplified, of said leg when loaded;
Fig. 3 shows a front view of said supporting leg with surrounding parts;
Fig. 4 shows a simplified circuit diagram for the hydraulic and pneumatic system for use in a vehicle with such a leg; and
Fig. 5 shows a lower part of a supporting leg according to the invention, in a second embodiment.

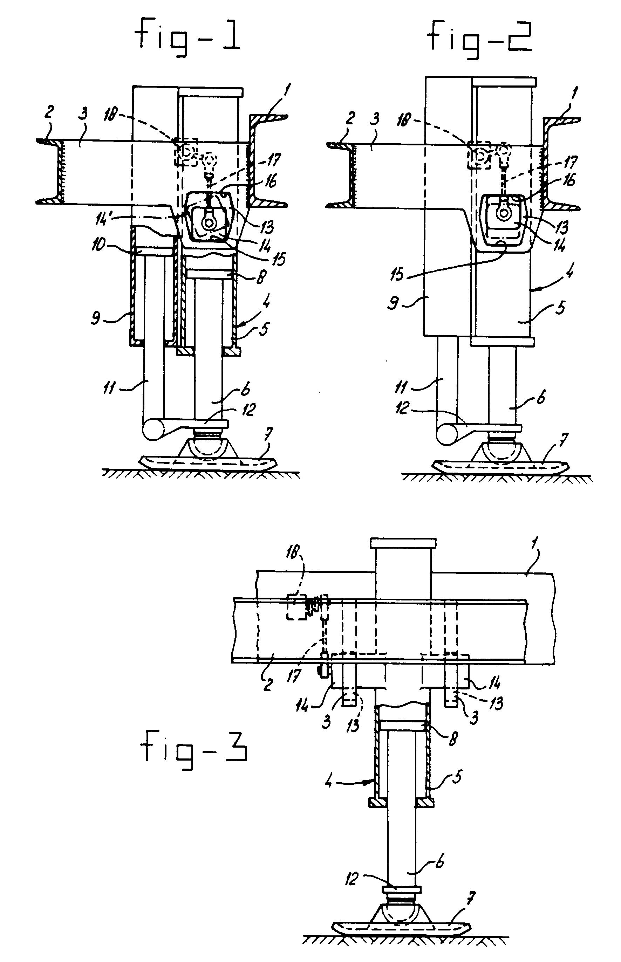

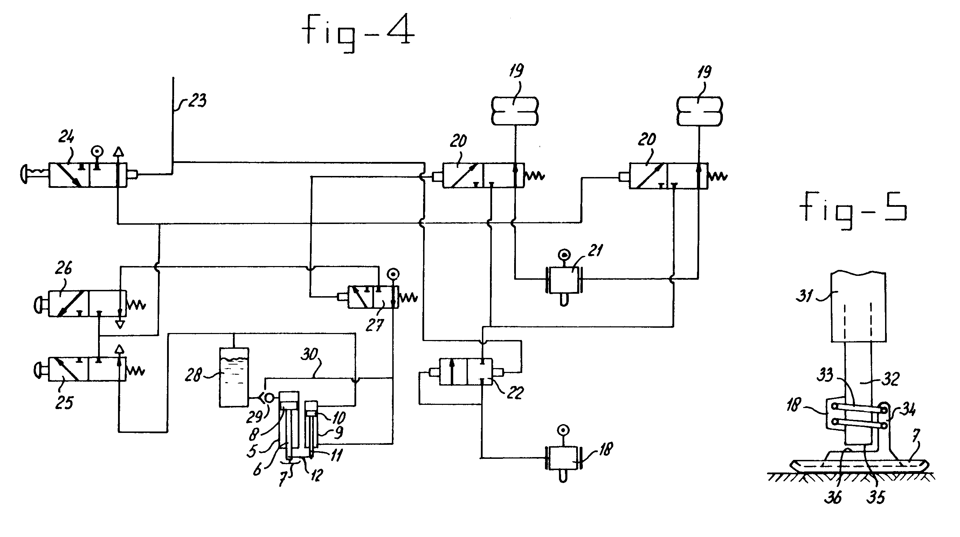

Two gusset plates 3 are fitted between two cross bars 1 and 2 of the chassis of a vehicle. A vertically movable supporting leg lies between them in the longitudinal centre of the vehicle. All this is normally fitted near the rear wheel axle. The supporting leg 4 essentially comprises two parts, the part 5, and a part 6 which can be moved up and down relative thereto and has a footplate (pad) 7. The part 6 engages a piston 8 in part 5, which forms a cylinder for it into which oil under pressure can be fed. Part 5 is firmly connected to a pneumatic cylinder 9, in which a piston 10 is movable, the piston rod 11 of which is connected firmly at 12 to the lower end of part 6. The supporting leg 4 is guided sliding vertically with the part 5 between the two gusset plates 3 on the chassis, which each have an aperture 13, into which part 5 engages by trunnions 14 firmly fixed thereto, which can transmit considerable forces. Said trunnions 14 can rest against the lower edge 15 and against the upper side 16 of said apertures 13, as shown in Figs. 1 and 2 respectively, the latter under considerable force transmission.

A hinged rod 17, hinged at the other side to a rotating arm of a height regulator 18 of the known type, is connected to the trunnions 14.

Fig. 4 shows how the vehicle has a gas bellows system suitable for use as a spring system during travelling on the road, and also, if desired with considerable extension relative to said travelling position, or with the switching on of additional gas bellows, which act in series with the normal spring bellows, in order to raise the loading floor of the vehicle from a low position during travelling to the height of a loading and unloading platform which may be considerably higher up.

The schematically shown bellows 19 of that system are connected by means of switchable valves 20 to a normal height regulator 21 for travelling on the road.

The height regulator 18 on the supporting leg is connected by means of a self-switching valve 22 to the valves 20.

Each compressed air supply to the system is indicated by a circle with a dot in it, apart from the line 23 for compressed air, connected to the brake system.

A manually operable switching valve 24 is used to switch the system from the normal travelling position over to working with the supporting leg for loading and unloading. There are also two manually operable switching valves 25 and 26 for raising and lowering the chassis respectively, and a switching valve 27 for permitting raising and lowering part 6 of the supporting leg.

A quantity of oil in reservoir 28 is connected by means of a controllable non-return valve 29 to the oil space above piston 8 in part 5 of the supporting leg, and valve 27 can hold this non-return valve open via air line 30 in order to let that oil flow out of said space above piston 8 to reservoir 28 when cylinder 9 is operated in such a way that piston 10 is moved up in it.

This system now works as follows. In the travelling position part 6 of the supporting leg 4 is raised by compressed air under piston 10, to such a height that the connection 12 between 11 and 6 lies from below against the lower side of part 5 of the supporting leg. Part 5 of the supporting leg is in the position of Fig. 1, with the trunnions 14 supported on the lower edges 15 of the apertures 13.

The valves 20 are in the position shown in Fig. 4, so that the air spring bellows 19 are controlled under the influence of the height regulator 21 for travelling on the road.

If the loading floor has to be raised for giving connection to a loading and unloading platform, valve 24 is reversed from the position shown in Fig. 4, so that compressed air flows through it to the control side of the valves 20, which are thus reversed in order to switch off the influence of the height regulator 21 and to bring the bellows under the influence of the height regulator 18, which is first of all shut off from said bellows and keeps them shut off through blocking of valve 22.

Valve 27 is also reversed by this, so that the space in pneumatic cylinder 9 below piston 10 is relieved and the non-return valve 29 is relieved so that it now works only as a normal non-return valve in the direction shown in Fig. 4.

In that position of valve 24 the compressed air is also supplied to the valves 25 and 26. Through operation of said valves, the chassis can now be raised (by 25) or lowered (by 26). During raising, the piston 10 is moved downwards by operating valve 25 until the pad 7 rests on the ground (position of Fig. 1), and during continued raising part 5 of the supporting leg 4 slides up between the gusset plates 3 until the trunnions 14 rest against the top edges 16 of the apertures 13 (position of Fig. 2). In the process, rod 17 sets the height regulator 18 in operation, so that it passes on compressed air first to the control side of valve 22, which thus reverses, and then to the bellows 19.

All this is carried out and synchronised in such a way that the raising by the bellows 19 continues until the valve 25 is no longer operated for lifting. The height regulator 18, of course, continues to supply the bellows 19 until it is switched off through the fact that the chassis has been raised so far that the trunnions 14 leave the position of Fig. 2 and reach approximately the position shown by dashed lines therein, the neutral position. When this position is reached, rod 17 will switch off the height regulator 18.

Corrections can be made to the height of the chassis by operating valves 25 and 26.

When a load is now moved in, the bellows 19 will compress slightly until the trunnions 14 return to the position shown by solid lines in Fig. 2, in which the supporting leg 4 takes the additional load. The height regulator 18 goes into operation again. The supporting leg is prevented from shortening by the oil confined above piston 8 in part 5 of the supporting leg, which keeps non-return valve 29 closed. The height regulator 18 increases the air volume in the bellows 19 to adapt to the increased load, by which the trunnions 14 return at greater or lesser speed to the neutral position, shown by dashed lines in Fig. 2.

When a load is being removed from the vehicle, the reverse, of course, takes place, except that the supporting leg does not absorb any force, and the air volume in the bellows 19 is correspondingly reduced.

In order to prevent the supporting leg from becoming too heavily loaded, for example by much more than corresponds to the load temporarily taken by the supporting leg when a part of the load is being moved in, something which may be caused by too low a pressure in the pneumatic system, an overload safety mechanism can be provided in the hydraulic system near or at non-return valve 29, so that when the pressure on the oil above piston 8 is too high it can flow away, so that the chassis can lower slowly relative to the supporting leg.

If one forgets to shorten the supporting leg before driving away, the supporting leg can swing away between the gusset plates 3. The trunnions 14 in fact have so much lateral space in the apertures 13 when in the neutral position, shown by dashed lines in Fig. 2, that they can rotate until they are in the position 14' shown by dashed lines in Fig. 1. The footplate 7 then swings the supporting leg 4 into the corresponding slanting position.

Springs and/or additional guides, for example, can ensure that the supporting leg 4 is prevented from rattling in interim positions, in which the trunnions 14 are clear of abutment edges 15 and 16.

Fig. 5 shows a supporting leg with a part 31 which is fixed to the chassis and has a part 32 which is vertically slidable therein. This supporting leg can be of the usual design as regards these parts, for example with pinion on part 31 and rack on part 32, or with a piston on the top of part 32 in a hydraulic cylinder in part 31, always in such a way that part 32 can be fixed relative to part 31.

The foot 7 is not fixed to part 32 here, but is connected by means of a parallelogram rod system 33, on the one hand, to an elevation 34 on the foot and, on the other, to the height regulator 18 provided on part 32. A separate arm can also lead from the foot to the height regulator, while the foot is suspended separately therefrom from part 32. Springs and/or abutments can limit the movement of the foot relative to part 32. When the supporting leg is unloaded, there is a short distance, for example of 2 to 3 cm, between the faces 35 and 36. When the foot is loaded, these faces rest on each other, and the height regulator 18 goes into operation, with the same result as in the preceding figures, thus with connection to the bellows 19 etc.

Of course, the invention can be embodied in all kinds of different ways, and all kinds of essentially known telescopic supporting legs can be used, provided that they are provided with or are interacting with a height regulator as given, which reacts to the loading of the supporting leg, which manifests itself in a displacement between parts of the supporting leg or between supporting leg and chassis.

## Claims

1. Device for fixing the height of a loading floor of a vehicle, said loading floor can be brought to the desired height by its own axle suspension gas bellows system (19), with one or more supporting legs (4) being lockable to the chassis (1, 2, 3), said supporting leg (4) having a telescopic part (6; 32) connected to a foot (7) to be supported on the ground, characterised in that a height regulator (18) is provided on said supporting leg (4), and acts between the chassis (1, 2, 3) and said telescopic part (6) or between said telescopic part (32) and said foot (7), said telescopic part (6; 32) being movable relative to said supporting leg (4) through loading said supporting leg (4), said height regulator (18) increasing the volume in the gas bellows system (19) in order to relieve the supporting leg (4) from the load.

2. Device according to Claim 1, in which the height regulator (18) is fitted between the chassis (1, 2, 3) and an upper part (5) of the supporting leg (4) not coming into contact with the ground, said upper part (5) of the supporting leg (4) is movable vertically relative to the chassis (1, 2, 3) with respect to an abutment (16) on the chassis (3) which limits its upward movement and can transfer forces coming from the load of the vehicle from the chassis (1, 2, 3) or from the loading floor onto the supporting leg (4), and said telescopic part (6) and said foot (7) having means (8, 9, 10) for sliding them relative to said upper part (5) and for fixing them relative to said upper part (5).

3. Device according to Claim 2, in which means (8, 9, 10) acting between said supporting leg parts for extending and shortening the supporting leg (4) comprise a mechanical or hydraulic fixing system (8) and a pneumatic extending and shorting device (9, 10).

4. Device according to Claim 3, in which the fixing system (8) comprises a space with a quantity of hydraulic medium and a valve (29) operable at least to relieve the load, in order to confine medium in a piston cylinder (5, 8) in or at the supporting leg (4).

5. Device according to Claim 1, in which the height regulator (18) is fitted between a part (32) of the supporting leg (4) which is movable in height relative to the chassis (1, 2, 3) and can be fixed relative thereto, and the foot (7) of the supporting leg (4) which is movable slightly in height relative, and said part (32) which can be fixed.

6. Device according to any of the preceding claims, having a second height regulator (21) for travelling on the road and with means (20, 24) for shutting off said second height regulator (21) from influence on the gas bellows system (19).

7. Device according to any of the preceding claims, in which the supporting leg (4) can be swung away pivotally on movement of the vehicle in the travel direction.

## Patentansprüche

1. Einrichtung zum Einstellen der Höhe der Ladefläche eines Fahrzeugs, wobei diese Ladefläche durch das eigene Achsfederungs-Gasfederbalgsystem (19) auf die gewünschte Höhe gebracht werden kann, mit einem oder mehreren Stützbeinen (4), die mit dem Chassis (1, 2, 3) verbunden werden können, wobei dieses Stützbein (4) einen Teleskopteil (6; 32) hat, der mit einem Fuß (7) zum Abstützen auf dem Boden versehen ist, dadurch gekennzeichnet, daß ein Höhenregulator (18) an dem genannten Stützbein (4) vorgesehen ist und zwischen dem Chassis (1, 2, 3) und dem genannten Teleskopteil (6) oder zwischen dem genannten Teleskopteil (32) und dem Fuß (7) wirkt, wobei das Teleskopteil (6; 32) relativ zu dem Stützbein (4) durch Belasten dieses Stützbeins (4) bewegbar ist und der Höhenregulator (18) das Volumen in dem Gasfederbalgsystem (19) erhöht, um das Stützbein (4) von der Ladung zu entlasten.

2. Einrichtung nach Anspruch 1, in der der Höhenregulator (18) zwischen dem Chassis (1, 2, 3) und einem oberen, nicht mit dem Boden in Berührung kommenden Teil (5) des Stützbeins (4) angebracht ist, wobei der obere Teil (5) des Stützbeins (4) vertikal relativ zum Chassis (1, 2, 3) im Hinblick auf ein Widerlager (16) am Chassis (3) bewegbar ist, das seine Aufwärtsbewegung begrenzt und die von der Ladung des Fahrzeugs vom Chassis (1, 2, 3) oder von der Ladefläche auf das Stützbein (4) kommenden Kräfte übertragen kann, und das Teleskopteil (6) und der Fuß (7) Mittel (8, 9, 10) haben, um sie relativ zu dem oberen Teil (5) gleiten zu lassen und sie relativ zu diesem oberen Teil (5) zu fixieren.

3. Einrichtung nach Anspruch 2, in welchem die Mittel (8, 9, 10), die zwischen den Stützbeinteilen zur Verlängerung oder Kürzung des Stützbeins (4) wirken, ein mechanisches oder hydraulisches Feststellsystem (8) und eine pneumatische Verlängerungs- und Verkürzungs-Vorrichtung (9, 10) umfassen.

4. Einrichtung nach Anspruch 3, in dem das Feststellsystem (8) einen Raum mit einer Menge eines Hydraulikmediums und ein Ventil (29) umfaßt, das bedienbar ist, um mindestens die Beladung herauszulassen, um Medium in einem Kolbenzylinder (5, 8) in oder an dem Stützbein (4) zu beschränken.

5. Einrichtung nach Anspruch 1, worin der Höhenregulator (18) zwischen einem Teil (32) des Stützbeins (4), das in der Höhe relativ zum Chassis (1, 2, 3) bewegbar ist und relativ dazu festgestellt werden kann, und dem Fuß (7) des Stützbeins, das etwas in der Höhe relativ bewegbar ist, angebracht ist, und diesem Teil (32), das festgestellt werden kann.

6. Einrichtung nach irgendeinem der vorangegangen Ansprüche, mit einem zweiten Höhenregulator (21) für das Fahren auf der Straße und Mitteln (20, 24) zum Abtrennen dieses zweiten Höhenregulators (21) vom Einfluß des Gasfederbalgsystems (19).

7. Einrichtung nach irgendeinem der vorangegangenen Ansprüche, worin das Stützbein (4) bei Bewegung des Fahrzeugs in der Fahrtrichtung um eine Achse weggedreht werden kann.

## Revendications

1. Dispositif pour fixer la hauteur d'un plancher de chargement d'un véhicule, ledit plancher de chargement pouvant être amené à la hauteur souhaitée par son propre système de soufflet à gaz comprimé de suspension d'essieu (19), un ou plusieurs jambages de support (4) pouvant être bloqués sur le châssis (1, 2, 3), ledit jambage de support (4) ayant une partie télescopique (6; 32) reliée à un pied (7) devant être placé sur le sol, caractérisé en ce qu'un organe de réglage de hauteur (18) est prévu sur ledit jambage de support (4) et agit entre le châssis (1, 2, 3) et ladite partie télescopique (6) ou entre ladite partie télescopique (32) et ledit pied (7), ladite partie télescopique (6; 32) étant déplaçable par rapport audit jambage de support (4) par le chargement dudit jambage de support (4), ledit organe de réglage de hauteur (18) augmentant le volume dans le système de soufflet à gaz comprimé (19) afin de libérer le jambage de support (4) de la charge.

2. Dispositif selon la revendication 1, dans lequel l'organe de réglage de hauteur (18) est installé entre le châssis (1, 2, 3) et une partie supérieure (5) du jambage de support (4) ne venant pas en contact avec le sol, ladite partie supérieure (5) du jambage de support (4) pouvant être déplacée verticalement par rapport au châssis (1, 2, 3) par rapport à une butée (16) se trouvant sur le châssis (3), qui limite son mouvement vers le haut et peut transférer des forces provenant de la charge du véhicule depuis le châssis (1, 2, 3) ou depuis le plancher de chargement sur le jambage de support (4), et ladite partie télescopique (6) et ledit pied (7) ayant des moyens (8, 9, 10) pour les faire coulisser par rapport à ladite partie supérieure (5) et pour les fixer par rapport à ladite partie supérieure (5).

3. Dispositif selon la revendication 2, dans lequel les moyens (8, 9, 10) agissant entre lesdites parties de jambage de support pour rallonger et raccourcir le jambage de support (4) comprennent un système de fixation mécanique ou hydraulique (8) et un dispositif pneumatique de rallongement et de raccourcissement (9, 10).

4. Dispositif selon la revendication 3, dans lequel le système de fixation (8) comprend un espace contenant une certaine quantité de milieu hydraulique et une soupape (29) servant au moins à libérer la charge, en vue de confiner un milieu dans un cylindre de piston (5, 8) dans ou sur le jambage de support (4).

5. Dispositif selon la revendication 1, dans lequel l'organe de réglage de hauteur (18) est monté entre une partie (32) du jambage de support (4), qui est déplaçable en hauteur par rapport au châssis (1, 2, 3) et peut lui être fixé, et le pied (7) du jambage de support (4) qui est légèrement déplaçable en hauteur, et ladite partie (32) qui peut être fixée.

6. Dispositif selon l'une quelconque des revendications précédentes, ayant un deuxième organe de réglage de hauteur (21) pour se déplacer sur la route et ayant un moyen (20, 24) pour interrompre l'influence dudit deuxième organe de réglage de hauteur (21) sur le système de soufflet à gaz comprimé (19).

7. Dispositif selon l'une quelconque des revendications précédentes, dans lequel le jambage de support (4) peut être pivoté lors du déplacement du véhicule dans la direction de déplacement.
